# EUROPEAN PATENT APPLICATION

(11) **EP 0 576 889 A1**
(43) Date of publication of application: **05.01.1994**
(21) Application number: 93109381.9
(22) Date of filing: 11.06.1993
(51) Int. Cl.: B60T 11/28, B60T 17/04

(54) **Protection valve assembly for a pneumatic braking installation with two braking circuits**

(30) Priority: 29.06.1992 IT TO920545
(71) Applicant: BENDIX HEAVY VEHICLE SYSTEMS ITALIA S.P.A., 20128 Milano (IT)
(72) Inventor: Milia, Gianluca, I-20142 Milano (IT); Rapa, Antonio, I-20052 Monza (IT)
(74) Representative: Quinterno, Giuseppe

(57) **Abstract**

The valve unit comprises two interception valves (V1, V2) between an inlet connector (1) intended to be connected to a compressor, and two outlet connectors (21, 22) intended to be connected to the two braking circuits of the braking system. The outlets of these interception valves can be coupled to the inlets of another two interception valves (V3, V4) via two supplementary valves (I1, I2) having a fixed opening pressure which is lower than the opening pressure of the said interception valves (V1-V4). The said second interception valves (V3, V4) are intended to be connected at their outlets, respectively, to a parking brake device and to auxiliary pneumatic devices of the braking system.

## Description

The present invention relates to a protection valve assembly for pneumatic braking systems, including two braking circuits, of the type currently called a reservoir protection valve unit.

More specifically, the invention relates to a protection valve assembly comprising
an inlet connector intended to be connected to the output of a source of air under pressure, in particular a compressor,
first and second outlet connectors intended to be connected to the pressure reservoirs of the first and second braking circuit respectively,
third and fourth outlet connectors intended to be connected to a parking brake device and to auxiliary pneumatic devices of the braking system respectively,
first and second normally closed interception valves the opening pressure of which automatically reduces with an increase in the pressure at their outlet, interposed between the inlet connector and the first and second outlet connector respectively;
third and fourth normally closed interception valves the opening pressure of which automatically reduces with an increase in the pressure at their outlets, and having respective outlets connected to the third and fourth outlet connector respectively; and
control valve means interposed between the outlet of the first and second interception valve respectively, and between the inlets of the third and fourth interception valve.

The primary object of such a valve assembly is to ensure, in the event of loss (of pressure) in one of the circuits connected to its outlet connectors, the supply of air under pressure to the remaining circuits notwithstanding this loss.

To this end the interception valves comprised in such a valve assembly are prearranged to open when the pressure at their inlets reaches a predetermined value, for example 7 bar. In a manner known per se such valves automatically reduce their opening pressure value, for example by about 1 bar, when the pressure at their outlets reaches a predetermined value, for example 6 bar. The reduction in the opening pressure value of such valves is substantially proportional to the increase in the pressure in the circuit connected to their outlets, and is not affected by the pressures in other circuits. In known valve units of the above-indicated type,the valve means interposed between the outlet of the first and second interception valve respectively, and the inlets of the third and fourth interception valve are constituted by a pair of simple non-return valves disposed in such a way as to allow a flow of air from the outlet of the first or second interception valve towards the inlet of the third and fourth. This arrangement is not able to ensure that in any situation the reservoirs of the two braking circuits connected to the first and second interception valve are filled with air under pressure before air under pressure is supplied to the third and fourth valve, and therefore to the parking brake and to the auxiliary pneumatic devices of the braking system.

In many applications it would further be desirable that for pressures greater than a predetermined value (for example 6 bar) the protection valve unit allows a transfer of air under pressure between the circuits connected to its outlet connectors. This possibility would allow a reduction in the volumes of the reservoirs.

Such transfer of air under pressure in protection valve units formed up to now is prevented by the presence of the said non-return valves.

The object of the present invention is that of providing a protection valve assembly of the above-indicated type which will allow the above mentioned limitations of valve units of the prior art to be overcome.

This object is achieved, according to the invention, by means of a protection valve unit of the above specified type, characterised by the fact that the said control valve means comprise first and second supplementary interception valves of normally-closed type and which open at a fixed pressure lower than the maximum opening pressure of the said interception valves.

According to a further characteristic, in parallel with the first and second interception valves there can conveniently be provided respective by-pass ducts, each including a narrow calibrated passage and a non-return valve operable to allow flow of air from the inlet connector to the outlet connector which is connected to the associated interception valve.

Further characteristics and advantages of the invention will become apparent from the following detailed description, given with reference to the attached drawings provided purely by way of non-limitative example, in which:
Figure 1 is a schematic representation of a protection valve unit according to the invention; and
Figure 2 is a partially sectioned schematic view which shows a possible embodiment of a supplementary interception valve forming part of the valve unit of Figure 1.

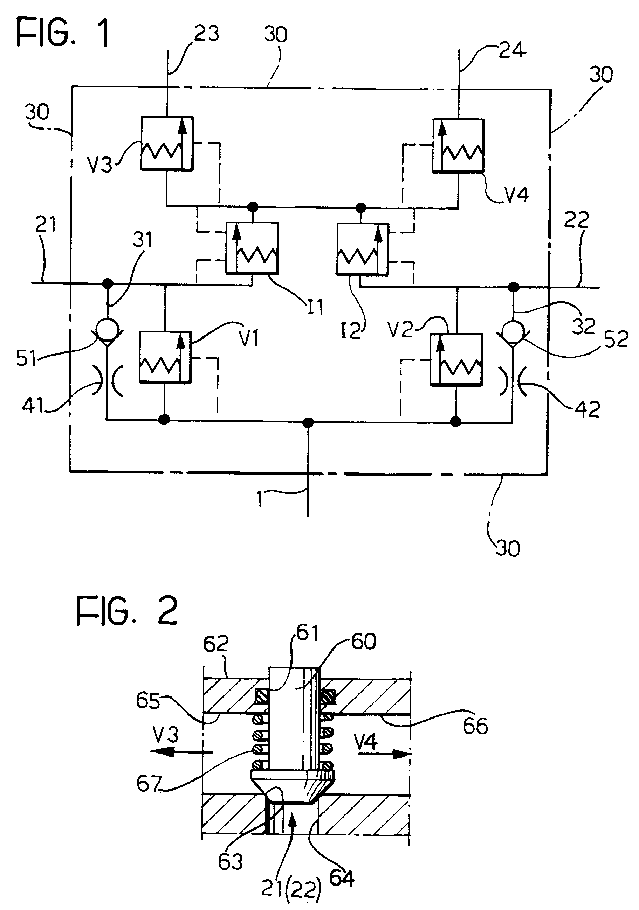

The protection valve unit according to the invention comprises a body 30 which, in Figure 1, has been schematically shown in the form of a broken line rectangle. This body has an inlet connector 1 intended to be connected to the output of a source of air under pressure, in particular a compressor (not illustrated). Between the outlet of this source and the connector 1 there is conveniently interposed (in a manner known per se) a pressure regulator device.

The body 30 further has first and second outlet connectors 21, 22 intended to be connected to the respective pressure reservoirs, of the first and second braking circuit of the motor vehicle, that is to say to the circuits associated with the front axle and the rear axle respectively.

Third and fourth outlet connectors 23 and 24 of the body 30 are, on the other hand, intended to be connected to a parking brake device and, respectively, to the auxiliary pneumatic devices of the braking system.

In the body 30 are formed four interception valves indicated V1 to V4. These valves are normally closed and of a type (known per se) the opening pressure of which automatically reduces upon increase in the pressure at their outlet.

When the pressure downstream of these valves is zero they have an opening pressure of for example 7 bar.

After these valves have opened, upon increase in the pressure in the circuits connected to their outlets their opening pressure progressively reduces, with a decrease of for example about 1 bar when the pressure downstream reaches a value of about 6 bar.

The interception valves V1 and V2 have respective inlets connected to the inlet connector 1, and respective outlets connected to the outlet connectors 21 and 22.

Between the outlet of the valve V1 and the inlets of the valves V3 and V4 is interposed a first supplementary, normally-closed interception valve indicated I1. The opening pressure of this valve is fixed and less than the maximum opening pressure of the interception valves V1-V4. If the maximum opening pressure of the valves V1-V4 is for example 7 bar, the opening pressure of the supplementary valve I1 is for example 5 bar.

Similarly, a second supplementary interception valve 12, identical to I1, is interposed between the outlet of the valve V2 and the inlets of the valves V3 and V4. This supplementary valve has a fixed opening pressure substantially equal to that of the supplementary valve I1.

In parallel to the valves V1 and V2 are provided respective by-pass ducts 31 and 32 each including a calibrated narrow passage 41, 42 and a non-return valve 51, 52.

The valves 51 and 52 are disposed in such a way as to allow a flow of air from the inlet connector 1 to the outlet connector 21 or 22 connected to the associated interception valve.

Preferably the opening pressure of the valve V3 is slightly greater than that of the other interception valves.

The above-described valve unit operates in the following way.

It is supposed that initially all the circuits connected to the outlet connectors 21-24 of the valve unit are exhausted.

In this condition the compressor connected to the inlet connector 1 of the valve unit causes supply of air under pressure to the circuits connected to the outlet connectors 21 and 22 via the by-pass ducts 31 and 32. Subsequently, upon achievement of the opening pressure, one of the valves V1 and V2 (for example the valve V1) opens and allows rapid supply of air under pressure to the circuit connected to its outlet.

After a certain time, but in any case before achievement of the opening pressure of the valve I1, the pressure in the circuit connected to the outlet connector 22 also reaches a high value (through the by-pass duct 32) thus reducing the opening pressure value of the valve V2.

When the pressure at the outlet of the valve V1 reaches the opening pressure of the valve I1, this latter opens and air under pressure arrives at the inlet of the valve V3. The valve V3 still remains closed since, pressure downstream of the outlet connector 23 being practically at 0 bar, the pressure necessary to open it is still equal to the maximum value (7 bar). Therefore the valves V1 and V2 can fill the circuits connected to the outlet connectors 21 and 22 before the valve V3 opens.

In this way it is ensured that the two principal circuits (that is the front axle braking circuit and the rear axle braking circuit of the motor vehicle) connected to the outlet connectors 21 and 22 of the valve unit are filled before air under pressure is supplied to the outlet connectors 23 or 24.

When the pressure at the inlet of the valves I1 and I2 is greater than the respective opening values, the said valves remain open allowing transfer of air under pressure between various sections.

In the event of loss in one of the circuits connected to the outlet connectors 21 and 22 of the valve unit (for example in the circuit connected to the connector 21) the associated supplementary valve (I1) closes preventing the escape of air under pressure from the circuit connected to the connector 22 towards the circuit in which the loss has occurred.

In Figure 2 there is schematically shown a possible embodiment of one of the two supplementary valves I1 and I2. In this embodiment the valve substantially comprises a mushroom headed valve shutter 60 slidably mounted sealingly in an aperture 61 formed in a wall 62. This shutter has an end valve head cooperating with a valve seat 63 to control communication between the inlet 64 of the valve and its outlets indicated 65 and 66. The inlet 64 of the valve is intended to be connected to the outlet of the valve V1 and, in any event, is in communication with the outlet of the connector 21 of the whole valve unit.

The outlets 65 and 66 are intended to be connected to the inlet of the interception valves V3 and V4 respectively.

A coil spring 67 reacting at one end against the wall 62 and at the other against the head of the valve shutter 60 tends to urge this shutter into engagement with the seat 63. This spring is dimensioned such as to allow opening of the valve when the pressure at the inlet exceeds the predetermined calibration value which, as already mentioned, can be for example 5 bar.

Above the wall 62 is atmospheric pressure.

Naturally, the principle of the invention remaining the same, the embodiments and details of construction can be widely varied with respect to what has been described and illustrated purely by way of non-limitative example, without by this departing from the ambit of the present invention.

## Claims

1. A protection valve assembly or unit for a pneumatic braking system having two braking circuits, comprising
an inlet connector (1) intended to be connected to a source of air under pressure, in particular a compressor,
first and second outlet connectors (21, 22) intended to be connected to the pressure reservoirs of the first and second braking circuit respectively,
third and fourth outlet connectors (23, 24) intended to be connected to a parking brake device and respectively, to auxiliary pneumatic devices of the braking system,
first and second normally-closed interception valves (V1, V2) the opening pressure of which reduces upon increase in the pressure at their outlets, respectively interposed between the inlet connector (1) and the first and second outlet connector (21, 22);
third and fourth normally-closed interception valves (V3, V4) the opening pressure of which automatically reduces upon increase in the pressure at their outlets, and having respective outlets connected to the third and fourth outlet connectors (23, 24) respectively; and
control valve means (I1, I2 ) interposed between respective outlets of the first and second interception valves (V1, V2), and the inlets of the third and fourth interception valves (V3, V4);
the protection valve unit being characterised by the fact that the said control valve means comprise first and second supplementary interception valves (I1, I2) of normally-closed type the opening pressure of which is fixed and less than the maximum opening pressure of the said interception valves (V1, V4).

2. A protection valve unit according to Claim 1, characterised in that respective by-pass ducts (31, 32) are provided in parallel with the first and second interception valve (V1, V2), each including a calibrated restricted passage (41, 42) and a non return valve (51, 52) operable to allow the passage of air under pressure from the inlet connector (1) to that outlet connector (21, 22) to which the associated interception valve (V1, V2) is connected.

3. A protection valve unit according to Claim 1 or Claim 2, characterised in that the opening pressure of the said third interception valve (V3) is greater than that of the other interception valves (V1-V4).
